# EUROPÄISCHE PATENTANMELDUNG

(11) **EP 3 040 232 A1**
(43) Veröffentlichungstag der Anmeldung: **06.07.2016**
(21) Anmeldenummer: 14200387.0
(22) Anmeldetag: 29.12.2014
(51) Int. Cl.: B60L 7/00, B60L 7/04, B60L 7/08, B60L 15/20, H02P 3/22

(54) **Sichere elektrische Bremse für einen Synchronmotor**

(71) Anmelder: Siemens Aktiengesellschaft, 80333 München (DE)
(72) Erfinder: Amler, Gerald, 90475 Nürnberg (DE); Bergner, Hans, 91058 Erlangen (DE)

(57) **Zusammenfassung**

Die Erfindung betrifft ein Verfahren zum sicheren Steuern eines Bremsmomentes eines Antriebssystems (1). Zur sicheren Steuerbarkeit des Bremsmomentes wird vorgeschlagen, dass das Antriebssystem (1) eine Synchronmaschine (2) und eine Umschaltvorrichtung (3) aufweist, wobei die Synchronmaschine (2) Phasenanschlüsse (20) aufweist, wobei die Umschaltvorrichtung (3) in einem ersten Zustand die Phasenanschlüsse (20) derart miteinander in Verbindung bringt, dass an der Synchronmaschine (2) ein erstes Bremsmoment (M_{Br1}) entsteht und in einem zweiten Zustand die Phasenanschlüsse (20) derart miteinander in Verbindung bringt, dass an der Synchronmaschine (2) ein zweites Bremsmoment (M_{Br2}) entsteht, wobei die Umschaltvorrichtung (3) zwischen den Zuständen derart umschaltet, dass sich im zeitlichen Mittel an der Synchronmaschine (2) ein vorgebbares Bremsmoment (M*) ergibt. Die Erfindung betrifft weiter ein Antriebssystem (1) zur Durchführung des Verfahrens, sowie ein Fahrzeug, insbesondere ein Schienenfahrzeug, mit einem solchen Antriebssystem (1).

## Beschreibung

Die Erfindung betrifft ein Verfahren zum sicheren Steuern eines Bremsmomentes eines Antriebssystems mit einer Synchronmaschine. Die Erfindung betrifft weiter ein Antriebssystem und ein Fahrzeug, insbesondere ein Schienenfahrzeug mit einem solchen Antriebssystem.

Antriebssysteme, die einen Stromrichter und einen Motor, auch als elektrische Maschine bezeichnet, aufweisen, können ein gewünschtes Drehmoment sehr genau an der Welle des Motors zur Verfügung stellen. Dies betrifft sowohl Momente zur Beschleunigung des Motors, sowie Bremsmomente zum Abbremsen des Motors.

Dieser Sachverhalt soll im Folgenden anhand des Beispiels von Schienenfahrzeugen genauer betrachtet werden. Schienenfahrzeuge werden heute meist elektrisch angetrieben. Ein Motor sorgt dafür dass das Fahrzeug beschleunigen aber auch abbremsen kann. Beim Abbremsen durch den Motor wird elektrische Energie zurückgespeist, die dann ins speisende Netz geleitet oder über Bremswiderstände vernichtet wird. Zusätzlich zu der elektrischen Bremse besitzen die Fahrzeuge auch eine mechanische Bremse, auch als Reibungsbremse bezeichnet, mit Bremsscheiben oder Radbremsen. Diese zweite mechanische Bremseinrichtung wird vor allem deswegen benötigt, um das Fahrzeug bei Ausfall der elektrischen Bremse sicher abbremsen zu können. Die heutigen Antriebssysteme funktionieren so zuverlässig, dass die mechanische Bremse praktisch nur noch zum Festbremsen im Stillstand benötigt wird, aber dennoch für den gesamten Drehzahlbereich ausgelegt werden muss.

Zulassungsbestimmungen verlangen eine sichere Bremse des Fahrzeugs, die in jedem Fahrzeugzustand das Fahrzeug sicher zum Stillstand bringt. Heutzutage ist hierfür die mechanische Bremse vorgesehen, die einen übersichtlichen Aufbau besitzt, aus dem die Wirkungsweise auf einfache Weise nachvollziehbar ist. Diese ist allerdings einem Verschleiß unterworfen, so dass diese regelmäßige Wartung erfordert.

Mit der heutigen Regelung des Stromrichters lassen sich innerhalb der Nenndaten von Maschine und Stromrichter beliebige Drehmomente, und damit auch Bremsmomente, einstellen. Allerdings ist die Regelung des Stromrichters aufgrund seiner vielen Eingangsgrößen und internen Rechenschritte sehr komplex. Aus diesem Grund ist der Nachweis einer fehlerfreien Regelung für alle möglichen Fahrzeug- und Betriebszustände nur äußerst schwierig zu erbringen. Damit eignet sich der Stromrichter mit seiner heutigen Regelung nur als Betriebsbremse, die durch eine auf das Fahrzeug und seine Kennwerte ausgelegte mechanische Bremse zur Gewährleistung der Sicherheitsanforderungen ergänzt wird.

Aus der DE 101 60 612 A1 ist ein Traktionsantrieb mit einem Traktionsstromrichter und einer permanenterregten Synchronmaschine bekannt. An einer Synchronmaschine, auch als Synchronmotor bezeichnet, kann auf einfache Weise dadurch ein Bremsmoment erzeugt werden, dass die Klemmen der Synchronmaschine mit Widerständen verbunden werden. Die Schrift beschreibt das Umschalten auf eine Widerstandsgruppe um das Fahrzeug sicher zu bremsen. Das Bremsmoment stellt sich über die Parameter der Maschine und des Widerstandeswertes sowie der Drehzahl ein.

Der Erfindung liegt die Aufgabe zugrunde, ein Verfahren zum sicheren Bremsen eines Antriebsystems mit einer Synchronmaschine anzugeben, bei dem sicher ein Bremsmoment erzeugt wird, das gesteuert werden kann.

Diese Aufgabe wird durch ein Verfahren zum sicheren Steuern eines Bremsmomentes eines Antriebssystems gelöst, wobei das Antriebssystem eine Synchronmaschine und eine Umschaltvorrichtung aufweist, wobei die Synchronmaschine Phasenanschlüsse aufweist, wobei die Umschaltvorrichtung in einem ersten Zustand die Phasenanschlüsse derart miteinander in Verbindung bringt, dass an der Synchronmaschine ein erstes Bremsmoment M_{Br1} entsteht und in einem zweiten Zustand die Phasenanschlüsse derart miteinander in Verbindung bringt, dass an der Synchronmaschine ein zweites Bremsmoment M_{Br2} entsteht, wobei die Umschaltvorrichtung zwischen den Zuständen derart umschaltet, dass sich im zeitlichen Mittel an der Synchronmaschine ein vorgebbares Bremsmoment M* ergibt. Diese Aufgabe wird weiter durch Antriebssystem zur Durchführung des Verfahrens zum sicheren Steuern eines Bremsmomentes gelöst, wobei das Antriebssystem eine Synchronmaschine und eine Umschaltvorrichtung aufweist, wobei die Synchronmaschine Phasenanschlüsse aufweist, wobei die Umschaltvorrichtung mit den Phasenanschlüssen elektrisch verbunden ist, wobei die Umschaltvorrichtung einen ersten und einen zweiten Zustand aufweist, wobei sich mindestens ein Wert der Impedanzen zwischen den Phasenanschlüssen im ersten und zweiten Zustand der Umschaltvorrichtung voneinander unterscheidet. Weiter wird diese Aufgabe durch ein Fahrzeug, insbesondere ein Schienenfahrzeug, mit einem entsprechenden Antriebssystem gelöst.

Vorteilhafte Ausgestaltungen der Erfindung sind in den abhängigen Ansprüchen angegeben.

Der Erfindung liegt die Erkenntnis zugrunde, dass eine Synchronmaschine, insbesondere eine permanenterregte Synchronmaschine dazu geeignet ist, ein sicheres Bremsen zu gewährleisten. Die Synchronmaschine hat die Eigenschaft, sobald sie gedreht wird, eine Spannung zu erzeugen, die über Widerstände zu Strömen und damit zu einem Bremsmoment führt. Damit lässt sich mit wenigen Elementen eine einfache elektrische Bremse aufbauen. Durch die wenigen Elemente ist diese Bremse geeignet, die Zulassungsbedingungen für eine sichere elektrische Bremse zu erfüllen. Aufgrund der geringen Komplexität ist der Nachweis der erforderlichen Sicherheit relativ einfach möglich.

Neben der sicheren Herstellung der Bremswirkung muss die Bremse steuerbar sein, um beispielsweise den maximalen Reibwert zwischen Rad und Schiene nicht zu überschreiten.

Um mit möglichst wenig zusätzlichen Komponenten für die Steuerung Elemente auszukommen, welche die Komplexität der Steuerung erhöhen würden und den Nachweis der Sicherheit erschweren würden, wird für die Erzeugung des Bremsmomentes eine Umschaltvorrichtung im Antriebssystem vorgesehen. Aufgabe der Umschaltvorrichtung ist es, dass die Umschaltvorrichtung die Phasenanschlüsse der Synchronmaschine derart beschaltet, dass in mindestens zwei Zuständen der Umschaltvorrichtung zwei unterschiedliche Bremsmomente an der Synchronmaschine entstehen. Dabei hat es sich als vorteilhaft erwiesen, wenn in einem ersten Zustand der Umschaltvorrichtung die Phasenanschlüsse der Synchronmaschine kurzgeschlossen sind und in einem zweiten Zustand der Umschaltvorrichtung die Phasenanschlüsse, vorzugsweise symmetrisch zueinander, mit mindestens einem Widerstand zu verbinden. Zur Herstellung der Symmetrie hat es sich als vorteilhaft erwiesen, die Ströme der Phasenanschlüsse gleichzurichten, beispielsweise mittels einer B6-Diodenbrücke, und anschließend den gleichgerichteten Strom einem Widerstand zuzuführen. Durch das Umschalten zwischen den beiden Zuständen der Umschaltvorrichtung wird ein Bremsmoment an der Synchronmaschine realisiert, das dem zeitlichen Mittelwert aus dem angelegten ersten Bremsmoment und dem angelegten zweiten Bremsmoment entspricht. Ein entsprechender Sollwert, auch als vorgebbares Bremsmoment bezeichnet, kann der Steuerung vorgegeben werden. Als besonders günstig hat es sich erwiesen, wenn die Umschaltung zwischen den Zuständen der Umschaltvorrichtung in der Größenordnung von 10 Hz stattfindet. Bei dieser Schaltfrequenz oder höheren Schaltfrequenzen wirkt sich eine Schwankung des Bremsmomentes aufgrund der Trägheit des Antriebssystems nicht merklich auf die Drehzahl oder Geschwindigkeit des Antriebssystems aus.

Als Umschaltvorrichtung kann auch ein im Antriebssystem bereits vorhandener selbstgeführte Stromrichter mit einem oder mehreren Bremsstellern im Zwischenkreis verwendet werden. Bei der Verwendung mehrerer Bremssteller sind mehr Zustände der Umschaltvorrichtung erreichbar, aus denen das vorgebbare Bremsmoment an der Synchronmaschine erzeugt werden kann. Als Bremssteller bezeichnet man eine Reihenschaltung von Widerstand und Schalter, wobei diese Reihenschaltung elektrisch parallel zu einem Zwischenkreiskondensator des selbstgeführten Stromrichters angeordnet ist. Der Schalter ist dabei meist als leistungselektronischer Schalter ausgeführt, damit er für schnelle Schalthandlungen bis in den Bereich von kHz einsetzbar ist. Im gesperrten Zustand der Leistungshalbleiter des selbstgeführten Stromrichters leiten die Freilaufdioden des selbstgeführten Stromrichters den Strom, wenn die Zwischenkreisspannung durch den Bremswiderstand abgesenkt wird. Die Bremsenergie wird über den Bremswiderstand in Wärme umgesetzt. Der Schalter, der den Bremswiderstand mit dem Zwischenkreis verbindet, kann, um auf möglichst wenig Elektronik zurückzugreifen, beispielsweise durch ein Schütz realisiert werden, dass während der Bremsung dauerhaft den Bremswiderstand einschaltet. Durch die Wahl des Widerstandwertes ist die Bremskraft über die Drehzahl bzw. Geschwindigkeit festgelegt.

Um eine besonders vorteilhafte Steuerung des Bremsmomentes zu erreichen, soll der selbstgeführte Stromrichter so gesteuert werden, dass periodisch von dem Zustand "Strom über Freilaufdioden", in dem die Phasenanschlüsse mit dem Widerstand des Bremsstellers über die Freilaufdioden elektrisch verbunden sind, in den Zustand "Kurzschluss", bei dem die Phasenanschlüsse der Synchronmaschine mittels der Leistungshalbleiterschalter des selbstgeführten Stromrichters kurzgeschlossen sind, übergegangen wird. Aufgrund der hohen Induktivitäten der Synchronmaschine, insbesondere bei permanent erregten Synchronmaschinen, treten während des Kurzschlusses der Phasenanschlüsse keine für den selbstgeführten Stromrichter unzulässig hohen Ströme auf. Meistens sind die Kurzschlussströme nur unwesentlich größer als die Nennströme. Mit dem Kurzschluss der elektrischen Maschine, wobei die elektrische Maschine auch als Motor bezeichnet wird, ergibt sich eine andere Bremskennlinie, die gerade bei hohen Drehzahlen kaum Drehmoment aufweist. Durch das periodische Umschalten der Zustände wechselt man zwischen den Bremskennlinien. Je nach Verhältnis der Zeitdauer der zwei Zustände ist damit im Mittel eine Bremskennlinie erreichbar, die zwischen der Widerstandsund der Kurzschlusskennlinie liegt. Von der Maximalgeschwindigkeit bis hin zu kleinen Geschwindigkeiten ist damit eine kontinuierliche Bremsmomentsteuerung zwischen Maximalmoment und kleinen Momenten möglich.

Diese Steuerung des Bremsmomentes bedarf keiner Regelung der Maschine oder des Stromes, beispielsweise unter Verwendung von Maschinengrößen. Allein durch den Gleitschutz, bei anderen Fahrzeugen auch als Antiblockiersystem, kurz ABS, bekannt, kann mehr oder weniger Moment angefordert werden und damit das Drehmoment gegenüber dem Maximalwert abgesenkt oder wieder erhöht werden.

Bei kleiner Drehzahl schneiden sich die Kurzschluss- und die Widerstandskennlinie des Bremsmomentes. In diesem Punkt ist keine Verstellbarkeit des Drehmomentes über dieses Verfahren mehr möglich. Eine Steuerung kann bei dieser Drehzahl bzw. Geschwindigkeit dadurch erreicht werden, der Schalter des Bremsstellers getaktet, das heißt periodisch angesteuert, wird. Die Taktung des Bremsstellers mit einem Aussteuergrad < 1 wirkt wie eine Vergrößerung des angeschlossenen Widerstandes. Dadurch ergibt sich beispielsweise bei einem Widerstand von 1 Ohm und einem Aussteuergrad von 50% eine Bremsmomentkennlinie wie bei einem Widerstand von 2 Ohm und 100% Aussteuergrad. Dabei bedeuten 100% Aussteuergrad, dass der Schalter dauerhaft eingeschaltet wird.

Durch die Taktung des Schalters des Bremsstellers ergibt sich auch bei höheren Drehzahlen eine weitere Beeinflussungsmöglichkeit. Da der Wert des Bremswiderstandes die Lage des Bremsmoment-Maximums bestimmt, ist somit eine Verschiebung dieses Maximums über den Bremssteller-Aussteuergrad möglich. Dadurch wechselt man, je nach Aussteuergrad des Bremsstellers, im Mittel von einer Kennlinie auf eine reduzierte Kennlinie. Wird diese Stellmöglichkeit verwendet, kann der Widerstand relativ niederohmig dimensioniert werden, so dass das maximale Bremsmoment bei einer niedrigen Geschwindigkeit erreicht wird. Oberhalb dieser Geschwindigkeit kann dann der wirksame Bremswiderstand über die Bremssteller-Aussteuerung angehoben werden, so dass bis zu maximalen Geschwindigkeit das maximale Bremsmoment verfügbar ist.

Bei ganz geringen Drehzahlen, insbesondere in der Nähe des Stillstandes, ist dennoch keine elektrische Bremse über das vorgestellte Verfahren mehr möglich. Dort muss das Fahrzeug über eine einfache Haltebremse zum Stillstand gebracht werden. Die Bremsenergie, die für diese letzte Restgeschwindigkeit in der Bremse in Wärme umgesetzt werden muss, ist um Faktoren kleiner als die Gesamtenergie eines Zuges mit Höchstgeschwindigkeit. Die verbleibende mechanische Bremse kann daher thermische sehr knapp und damit sehr kostengünstig ausgelegt werden.

Das Umschalten zwischen der Kurzschluss- und Widerstandskennlinie des Bremsmomentes kann in einer vorteilhaften Ausgestaltungsform durch ein einfaches Zeitglied realisiert werden, um den zeitlichen Mittelwert der Kennlinien einzustellen. Für die Bremsung des Fahrzeugs würde eine Wiederholrate von ca. 10Hz durchaus ausreichen, damit eine Schwankung des Bremsmomentes des Fahrzeugs nicht wahrnehmbar ist. Der Vorteil liegt in der ungeregelten Ausführung. Eine mögliche weitere Ausführungsform liegt darin, dass das Puls-Pausenverhältnis auf die Drehzahl der Maschine synchronisiert wird. Die Drehzahl bzw. die Frequenz der elektrischen Größen kann z.B. aus den gemessenen Motorströmen gewonnen werden. Damit wird der Zustand "Kurzschluss" eine feste Anzahl pro Grundschwingungsperiode mal eingenommen. Bei einer kontinuierlichen Verstellung des Puls-Pausenverhältnisses gibt es keine Einschwingvorgänge. Eine Regelung des Stromes ist auch weiterhin nicht erforderlich. Das Puls-Pausenverhältnis kann fest vorgegeben werden. Nur die Frequenz wird über die Synchronisation bestimmt.

Auch das Takten des Schalters des Bremsstellers, wie bereits zuvor beschreiben, zur Erweiterung des Kennlinienbereichs der Bremsmomente, kann gesteuert aus den Zustandsgrößen eingestellt werden. Beispielsweise kann der Aussteuergrad in Abhängigkeit der Drehzahl variiert werden. Auch hier ist eine Regelung nicht erforderlich.

Im Diodenbetrieb auf den Widerstand fließt der Strom gleichzeitig nicht über sechs sondern über drei Freilaufdioden. Je nach Vorzeichen des Stromes über eine obere oder eine untere Freilaufdiode. Dabei können die folgenden Schaltzustände auftreten: Entweder eine obere und zwei untere Freilaufdioden, oder umgekehrt über zwei obere und eine untere Freilaufdioden. Insgesamt gibt es sechs Kombinationsmöglichkeiten. Für den Übergang in den Kurzschluss müssen deswegen am Stromrichter nicht drei Leistungshalbleiterschalter des Stromrichters eingeschaltet werden. Es reicht, einen einzigen Leistungshalbleiterschalter des Stromrichters einzuschalten, und zwar denjenigen, der in der gleichen (oberen oder unteren) Hälfte des Stromrichters liegt, wie die leitenden Freilaufdioden. Dies lässt sich durch eine einfache Logik aus den Vorzeichen der Ströme herausfinden. Mit diesem Verfahren entspricht die Schaltfrequenz der Leistungshalbleiter der Grundfrequenz des Motors, was auch die Verluste des Stromrichters minimiert.

Das beschriebene Verfahren ist auch anwendbar, wenn anstelle des Bremsstellers oder zusätzlich zum Bremssteller eine externe Widerstandseinrichtung verwendet wird.

Genauso ist es möglich, zu den Freilaufdioden des Stromrichters einen weiteren Gleichrichter und Widerstand parallel zu schalten. Die Reduktion des Bremsmoments durch Kurzschließen mittels des Stromrichters funktioniert erfolgt damit wie beschrieben.

Mit welcher Leistung der Motor wirklich bremst kann aus einer einfachen Berechnung aus Spannungen und Strömen am Motor ermittelt werden. Damit kann zur Erhöhung der Sicherheit die Wirksamkeit der Bremse einfach und effektiv überprüft werden. Dies erhöht die Sicherheit der elektrischen Bremse und vereinfacht die Zulassung eines solchen Verfahrens für ein Fahrzeug, insbesondere ein Schienenfahrzeug. Alternativ kann die Berechnung des an der Synchronmaschine anliegenden Bremsmomentes durch Messung von Spannung und Strom am Widerstand erfolgen. Aus diesen Größen kann ermittelt werden, ob das Fahrzeug tatsächlich bremst und ob das Bremsmoment dem Sollwert entspricht. Damit kann eine Eigenüberwachung der des Verfahrens zum sicheren Steuern eines Bremsmomentes einfach und zuverlässig realisiert werden.

Im Folgenden wird die Erfindung anhand der in den Figuren dargestellten Ausführungsbeispiele näher beschrieben und erläutert. Dabei zeigen:
- FIG 1, FIG 2: den beispielhaften Verlauf des Bremsmomentes über der Geschwindigkeit für zwei unterschiedliche Widerstandswerte,
- FIG 3: den beispielhaften Verlauf zweier Bremsmomente,
- FIG 4: ein erstes Ausführungsbeispiel der Erfindung,
- FIG 5: ein zweites Ausführungsbeispiel der Erfindung und
- FIG 6: ein weiteres Ausführungsbeispiel mit einem selbstgeführten Stromrichter als Umschaltvorrichtung.

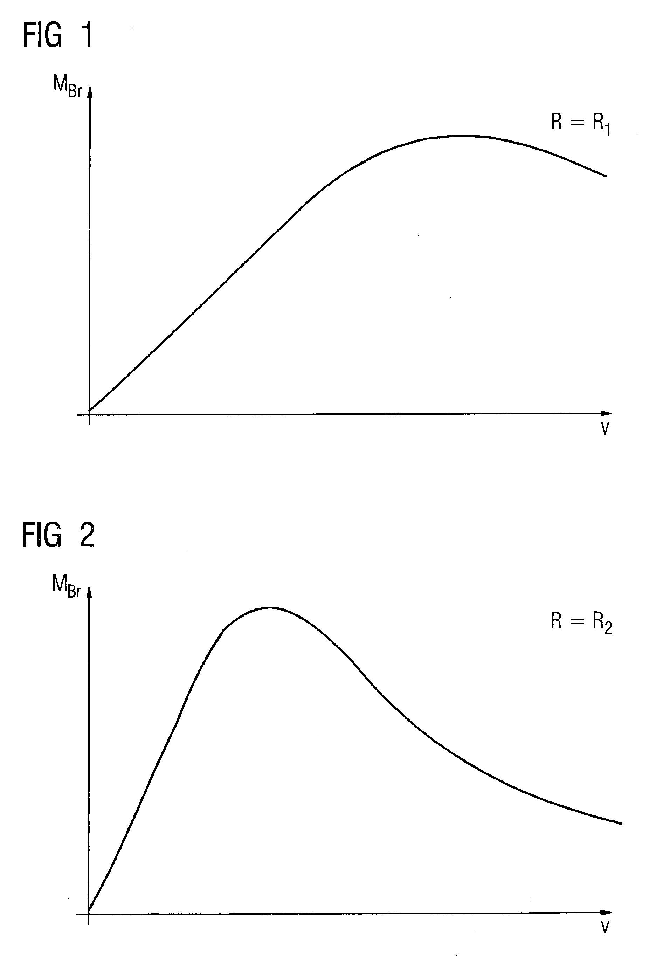

FIG 1 zeigt den Verlauf des Bremsmomentes M_{Br} über der Drehzahl für den Fall, dass die Phasenanschlüssen 20 jeweils mit einem Widerstand 4 mit einem Wert R₁ elektrisch verbunden sind. Für einen zweiten Widerstand 4 mit einem Wert R₂ mit R₂ < R₁ ist der Verlauf in FIG 2 dargestellt. Es ist deutlich zu erkennen, dass das Maximum des erreichbaren Bremsmomentes M_{Br} für kleinere Widerstände 4 bei kleineren Geschwindigkeiten auftritt. Bei einer Drehzahl von Null ist unabhängig vom Widerstandswert kein Bremsmoment M_{Br} an der Synchronmaschine 2 erreichbar. Um auch im Stillstand ein Bremsmoment auf das Antriebssystem ausüben zu können, muss eine weitere Bremse, wie beispielsweise eine mechanische Bremse, im Antriebssystem 1 vorgesehen werden.

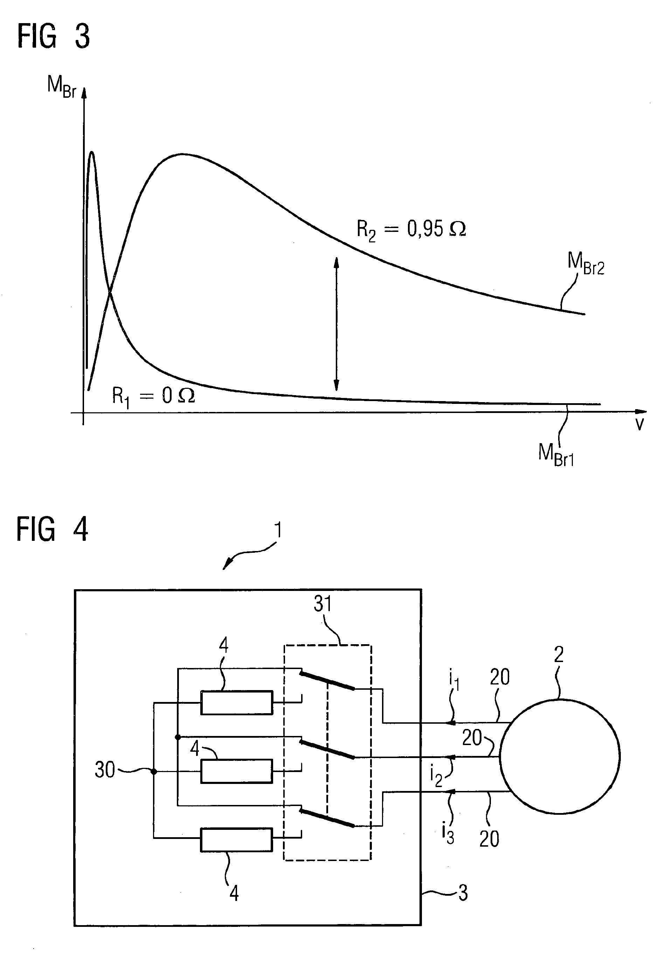

FIG 3 zeigt den Verlauf eines ersten Bremsmomentes M_{Br1}, wobei dies dadurch entsteht, dass die Phasenschlüsse 20 der Synchronmaschine 2 kurzgeschlossen sind, und den Verlauf eines zweiten Bremsmomentes M_{Br2}, bei dem die Phasenanschlüsse 20 über mindestens einen Widerstand 4 miteinander verbunden sind. Der Bereich, der zwischen den beiden Kurven liegt, kann durch das Verfahren zum sicheren Steuern des Bremsmomentes M_{Br} derart genutzt werden, ein Bremsmoment M_{Br} an der Synchronmaschine 2 zu erzeugen. Den Bereich oberhalb des zweiten Bremsmomentes, zumindest der Teil der rechts vom Maximum des zweiten Bremsmomentes M_{Br2} liegt, kann dann an der Synchronmaschine 2 erzeugt werden, wenn die Umschaltvorrichtung 3 einen Schalter 5 aufweist, der den Stromfluss durch den Widerstand 4 zeitweise unterbricht. Mit dieser Unterbrechung kann der wirksame Widerstand an den Phasenanschlüssen 20 erhöht werden, was zu einer Verlagerung des Maximums hin zu höheren Drehzahlen führt.

FIG 4 zeigt ein erstes Ausführungsbeispiel der Erfindung. Das Antriebssystem 1 weist dabei eine Synchronmaschine 2, insbesondere eine permanent erregte Synchronmaschine 2, und eine Umschaltvorrichtung 3 auf, die elektrisch über die Phasenanschlüsse 20 miteinander verbunden sind. Die Umschaltvorrichtung 3 umfasst einen Umschaltvorrichtungsschalter 31. Dieser schließt in einer dargestellten oberen Position des Umschaltvorrichtungsschalters 31 die Phasenanschlüsse 20 kurz, während der Umschaltvorrichtungsschalter 31 in einer zweiten Position, d.h. in der unteren Position des dargestellten Umschaltvorrichtungsschalters 31, die Phasenanschlüsse 20 der Synchronmaschine 2 über eine Sternschaltung von Widerständen 4 miteinander verbindet. Die Sternschaltung wird durch eine Verbindung zwischen den Schaltkontakten des Umschaltvorrichtungsschalters 31 und einem Sternpunkt 30 gebildet, wobei in diese Verbindung jeweils der Widerstand 4 angeordnet ist. Als vorteilhaft hat es sich erwiesen, für die dargestellten Widerstände 4 gleiche Widerstandswerte vorzusehen. Damit ist das Bremsmoment über eine Motordrehung hinweg konstant. Unangenehmes Ruckeln, beispielsweise in einem Fahrzeug oder Schienenfahrzeug, wird dadurch vermieden.

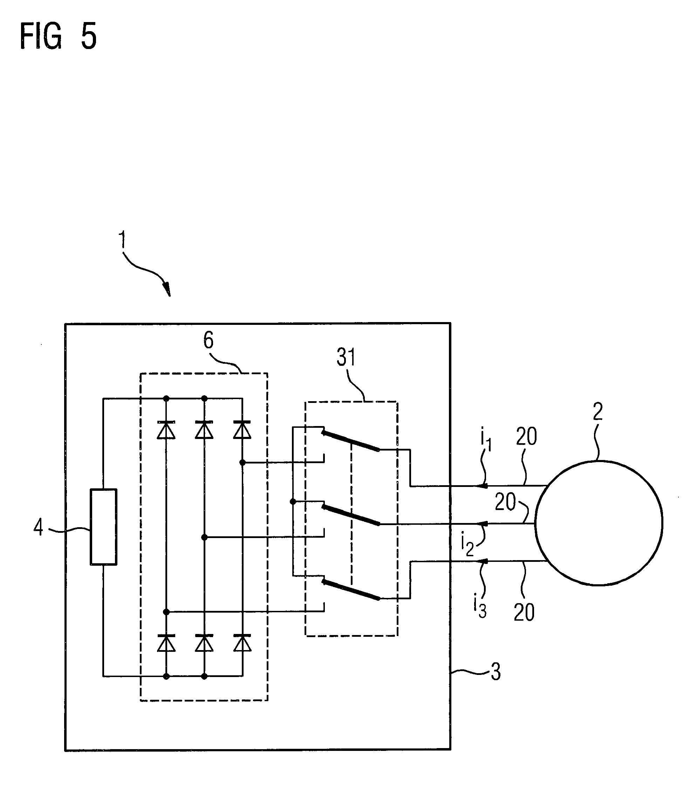

Das Ausführungsbeispiel der FIG 5 kommt im Vergleich zum Ausführungsbeispiel der FIG 4 mit einer geringeren Anzahl an Widerständen 4 aus. Zur Vermeidung von Wiederholungen wird auf die Beschreibung zur FIG 4 sowie auf die dort eingeführten Bezugszeichen verwiesen. Auch in dem Ausführungsbeispiel der FIG 5 wird ein gleichmäßiges Bremsmoment über die gesamte Drehung der Synchronmaschine 2 dadurch erreicht, dass in Bezug auf die alle Phasenanschlüsse 20 durch die Gleichrichtung symmetrische Bedingungen geschaffen werden. Die Gleichrichtung der Ströme der Phasenanschlüsse 20 wird durch das Mittel 6 zur Gleichrichtung vorgenommen. In diesem Ausführungsbeispiel wird dies durch eine Dioden-Brücke realisiert. Diese Diodenbrücke wird auch als ungesteuerte B6-Brücke oder B6-Diodenbrücke bezeichnet. Diese benötigt keine Steuerung und kann kostengünstig in der Umschaltvorrichtung 3 integriert werden.

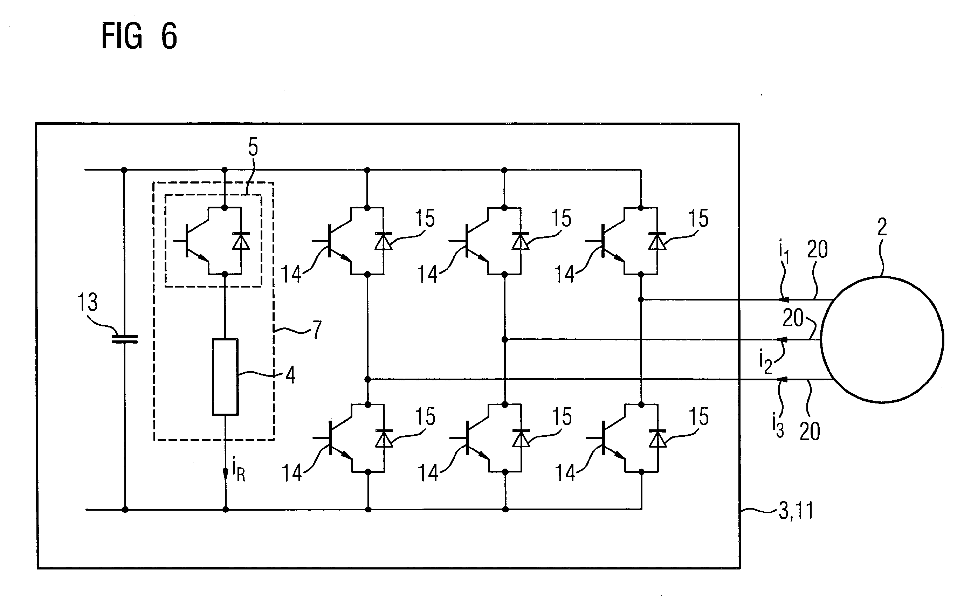

FIG 6 zeigt ein Ausführungsbeispiel, wobei die Umschaltvorrichtung durch einen selbstgeführten Stromrichter 11 gebildet wird. Zur Vermeidung von Wiederholungen wird auf die Beschreibung zu den Figuren 1 bis 5 sowie auf die dort eingeführten Bezugszeichen verwiesen. Der selbstgeführte Stromrichter 11 weist einen Bremssteller 7, einen Zwischenkreiskondensator 13 und Leistungshalbleiter 13, 14 auf. Im Zwischenkreis befindet sich ein Bremssteller 7. Dieser ist parallel zu dem Zwischenkreiskondensator 13 angeordnet. Der Bremssteller weist eine Reihenschaltung von dem Widerstand 4 und einem Schalter 5 auf. Die Leistungshalbleiter 13, 14 des Stromrichters, d.h. der Leistungshalbleiterschalter 14 und die Freilaufdiode 15 übernehmen die Rolle des Umschaltvorrichtungsschalters 31. Wenn keiner der Leistungshalbleiterschalter angesteuert wird, können Ströme nur über die Freilaufdioden 15 des selbstgeführten Stromrichters 11 fließen. Dies geschieht dann, wenn die Zwischenkreisspannung, d.h. die Spannung am Zwischenkreiskondensator 13 geringer ist als die Amplitude der durch die Synchronmaschine 2 induzierten Spannung. Gegebenenfalls kann die Spannung des Zwischenkreiskondensators 13 durch Einschalten des Schalters 5 so weit gesenkt werden, dass die Freilaufdioden 15 leitend werden und ein Strom durch den Widerstand 4 fließt.

Der Schalter 5 kann in diesem Ausführungsbeispiel beispielsweise als leistungselektronischer Schalter, wie dargestellt, oder als mechanischer Schalter ausgebildet sein. In einer Ausbildung als leistungselektronischer Schalter kann er mit einer hohen Frequenz schalten. Das Schalten eines leistungselektronischen Schalters wird auch als Takten bezeichnet. Wenn man einen besonders einfachen Aufbau anstrebt, kann als Schalter 5 ein mechanischer Schalter, wie beispielsweise ein Schütz, eingesetzt werden. Dieser Schalter 5 erfordert keine Ansteuerelektronik. Durch diese einfache Ansteuerung ist der mechanische Schalter im Besonderen für sicherheitsrelevante Anlagen wie das sichere Bremsen eines Fahrzeugs geeignet.

Im ersten Zustand der Umschaltvorrichtung 3 werden die Phasenanschlüsse 20 der Synchronmaschine 2 kurzgeschlossen. Dies geschieht mit Hilfe der Leistungshalbleiter 14, 15 des selbstgeführten Stromrichters 11. Zur Erzeugung des Kurzschlusses werden alle Phasenanschlüsse 20 entweder mit dem oberen oder dem unteren Zwischenkreispotential verbunden. Dazu ist mindestens ein Leistungshalbleiterschalter 14 einzuschalten. Aufgrund der Stromrichtung der Ströme i₁, i₂, i₃ der Phasenanschlüsse 20 entscheidet sich, ob bei dem Kurzschluss der entsprechende Phasenstrom durch den Leistungshalbleiterschalter 14 oder die Freilaufdioden 15 fließt. Es ist dann nur der Leistungshalbleiterschalter 14 anzusteuern, d.h. einzuschalten, dass sich der Kurzschluss der Phasenanschlüsse 20 ergibt. Um eine Auswahllogik für das Ansteuern des Leistungshalbleiterschalters 15 zu vermeiden, können zur Erzeugung eines Kurzschlusses alle oberen Leistungshalbleiterschalter 15 oder alle unteren Leistungshalbleiterschalter 15 angesteuert werden. Mit den oberen Leistungshalbleiterschaltern 15 werden die Leistungshalbleiterschalter 15 bezeichnet, die mit dem positiven Zwischenkreispotential verbunden sind. Unter den unteren Leistungshalbleiterschaltern 15 versteht man die Leistungshalbleiterschalter 15, die mit dem negativen Zwischenkreispotential verbunden sind.

Im zweiten Zustand der Umschaltvorrichtung 3, in der die Phasenanschlüsse der Synchronmaschine mit dem Widerstand 4 verbunden sind, muss der Schalter 5 dauerhaft eingeschaltet sein oder takten. Durch das Takten, d.h. das wiederholte Ein- und Ausschalten des Schalters 5 wird der für das Bremsmoment der Synchronmaschine 2 wirksame Widerstand 4 vergrößert. Damit erhöht sich der Bereich der an der Synchronmaschine 2 erreichbaren Bremsmomente wie zur FIG 3 beschrieben. Da parallel zum Bremssteller 7 der Zwischenkreiskondensator 13 angeordnet ist, kann der Schalter 5 auf einfache Weise geöffnet werden, auch wenn die Ströme durch die Induktivitäten der Synchronmaschine 2 getriebene werden, da sich für diese Ströme beim Ausschalten des Schalters 5 ein Strompfad durch den Zwischenkreiskondensator 13 ergibt. Die Leistungshalbleiterschalter 14 des selbstgeführten Stromrichters 11 werden im zweiten Zustand der Umschaltvorrichtung 3 nicht angesteuert, d.h. diese Leistungshalbleiterschalter 14 sind ausgeschaltet.

Obwohl die Erfindung im Detail durch die bevorzugten Ausführungsbeispiele näher illustriert und beschrieben wurde, ist die Erfindung nicht alleine auf die offenbarte Beispiele beschränkt und andere Variationen können vom Fachmann hieraus abgeleitet werden, ohne den Schutzumfang der Erfindung zu verlassen.

## Patentansprüche

1. Verfahren zum sicheren Steuern eines Bremsmomentes eines Antriebssystems (1), wobei das Antriebssystem (1) eine Synchronmaschine (2) und eine Umschaltvorrichtung (3) aufweist, wobei die Synchronmaschine (2) Phasenanschlüsse (20) aufweist, wobei die Umschaltvorrichtung (3) in einem ersten Zustand die Phasenanschlüsse (20) derart miteinander in Verbindung bringt, dass an der Synchronmaschine (2) ein erstes Bremsmoment (M_{Br1}) entsteht und in einem zweiten Zustand die Phasenanschlüsse (20) derart miteinander in Verbindung bringt, dass an der Synchronmaschine (2) ein zweites Bremsmoment (M_{Br2}) entsteht, wobei die Umschaltvorrichtung (3) zwischen den Zuständen derart umschaltet, dass sich im zeitlichen Mittel an der Synchronmaschine (2) ein vorgebbares Bremsmoment (M*) ergibt.

2. Verfahren nach Anspruch 1, wobei zur Entstehung des ersten Bremsmomentes (M_{Br1}) die Phasenanschlüsse (20) der Synchronmaschine (2) kurzgeschlossen werden.

3. Verfahren nach einem der Ansprüche 1 oder 2, wobei zur Entstehung des zweiten Bremsmomentes (M_{Br2}) die Phasenanschlüsse (20) der Synchronmaschine (2) mit mindestens einem Widerstand (4) verbunden werden.

4. Verfahren nach Anspruch 3, wobei zur Entstehung des zweiten Bremsmomentes (M_{Br2}) Ströme (i₁, i₂, i₃) der Phasenanschlüsse (20) der Synchronmaschine (2) gleichgerichtet werden und nach der Gleichrichtung dem mindestens einen Widerstand (4) zugeführt werden.

5. Verfahren nach einem der Ansprüche 3 oder 4, wobei ein Strom (i_{F}) durch den mindestens einen Widerstand (4) mittels eines Schalters (5) derart unterbrochen wird, dass sich der für die Erzeugung des zweiten Bremsmomentes (M_{Br2}) wirksame Widerstandswert derart verändert, dass sich das zweite Bremsmoment (M_{Br2}) ändert.

6. Verfahren nach einem der Ansprüche 1 bis 5, wobei die Umschaltvorrichtung (3) durch einen selbstgeführten Stromrichter (11) gebildet wird, wobei der selbstgeführte Stromrichter (11) gleichspannungsseitig elektrisch parallel zu einem Zwischenkreiskondensator (13) eine Reihenschaltung des Widerstands (4) und des Schalters (5) aufweist, wobei mindestens ein Leistungshalbleiterschalter (14) des selbstgeführten Stromrichters (11) in dem ersten Zustand des selbstgeführten Stromrichters (11) derart angesteuert werden, die Phasenanschlüssen (20) kurzzuschließen und in dem zweiten Zustand des selbstgeführten Stromrichters (11) nicht angesteuert werden, so dass die Phasenanschlüsse (20) über Freilaufdioden (15) mit dem Widerstand (4) verbunden sind.

7. Verfahren nach einem der Ansprüche 1 bis 6 wobei aus Spannungen und Strömen an den Phasenanschlüssen (20) der Synchronmaschine (2) überprüft wird, ob das vorgebbare Bremsmoment an der Synchronmaschine (2) erreicht wird.

8. Verfahren nach einem der Ansprüche 1 bis 7, wobei das Verfahren zum Bremsen eines Fahrzeugs, insbesondere eines Schienenfahrzeugs, angewendet wird.

9. Verfahren nach einem der Ansprüche 1 bis 8, wobei das Antriebssystem (1) eine mechanische Bremse aufweist, wobei bei unterschreiten einer festgelegten Drehzahl des Antriebs oder einer festgelegten Geschwindigkeit des Fahrzeugs eine mechanische Bremse aktiviert wird.

10. Verfahren nach einem der Ansprüche 1 bis 9, wobei das Umschalten zwischen den Zuständen der Umschaltvorrichtung (3) durch ein Zeitglied gesteuert wird.

11. Verfahren nach einem der Ansprüche 8 bis 10, wobei das Umschalten zwischen den Zuständen der Umschaltvorrichtung (3) durch eine Gleitschutzeinrichtung gesteuert wird.

12. Antriebssystem (1) zur Durchführung des Verfahrens zum sicheren Steuern eines Bremsmomentes nach einem der Ansprüche 1 bis 11, wobei das Antriebssystem (1) eine Synchronmaschine (2) und eine Umschaltvorrichtung (3) aufweist, wobei die Synchronmaschine (2) Phasenanschlüsse (20) aufweist, wobei die Umschaltvorrichtung (3) mit den Phasenanschlüssen (20) elektrisch verbunden ist, wobei die Umschaltvorrichtung (3) einen ersten und einen zweiten Zustand aufweist, wobei sich mindestens ein Wert der Impedanzen zwischen den Phasenanschlüssen im ersten und zweiten Zustand der Umschaltvorrichtung (3) voneinander unterscheidet.

13. Antriebssystem (1) nach Anspruch 12, wobei in einem ersten Zustand der Umschaltvorrichtung (3) die Phasenanschlüsse (20) kurzgeschlossen sind.

14. Antriebssystem (1) nach einem der Ansprüche 12 oder 13, wobei in einem zweiten Zustand der Umschaltvorrichtung (3) die Phasenanschlüsse (20) der Synchronmaschine (2) mit mindestens einem Widerstand (4) verbunden sind.

15. Antriebssystem (1) nach Anspruch 14, wobei in dem zweiten Zustand der Umschaltvorrichtung (3) die Phasenanschlüsse (20) der Synchronmaschine (2) jeweils über einen Widerstand (4) mit einem Sternpunkt (30) verbunden sind.

16. Antriebssystem (1) nach Anspruch 14, wobei die Umschaltvorrichtung (3) durch einen selbstgeführten Stromrichter (11) gebildet wird, wobei der selbstgeführte Stromrichter (11) wechselspannungsseitig mit den Phasenanschlüssen (20) der Synchronmaschine (2) verbunden ist, wobei der selbstgeführte Stromrichter (11) gleichspannungsseitig einen Zwischenkreis aufweist, wobei der Widerstand (4) mit einem Schalter (5) in einer Reihenschaltung angeordnet ist, wobei die Reihenschaltung elektrisch parallel zum Zwischenkreis des selbstgeführten Stromrichters (11) angeordnet ist.

17. Fahrzeug, insbesondere Schienenfahrzeug, mit einem Antriebssystem (1) nach einem der Ansprüche 12 bis 16.
